# EUROPÄISCHE PATENTANMELDUNG

(11) **EP 1 693 502 A1**
(43) Veröffentlichungstag der Anmeldung: **23.08.2006**
(21) Anmeldenummer: 06002410.6
(22) Anmeldetag: 07.02.2006
(51) Int. Cl.: D06N 3/00, B32B 5/04

(54) **Textilkaschiertes Bauteil**

(30) Priorität: 19.02.2005 DE 102005007791
(71) Anmelder: Strähle & Hess GmbH & Co. KG, 75382 Althengstett (DE); SC Schäfer Car Specials GmbH & Co.KG, 97076 Würzburg (DE)
(72) Erfinder: Karakas, Semra, 70176 Stuttgart (DE); Scheller, Uwe, 97225 Retzbach (DE)
(74) Vertreter: Kohler Schmid Möbus

(57) **Zusammenfassung**

Bei einem textilkaschierten Bauteil (1), welches ein Trägermaterial (2) und zumindest abschnittsweise eine Textilschicht (3) aufweist, die mit einer Schutzschicht (4) überzogen ist, ist die Textilie (3) als elastisch verformbare Textilie (3), insbesondere elastisch verformbares Geflecht, Gewebe, Gestrick, Gewirk oder dgl. ausgebildet. Dadurch erfolgt eine gute Anpassung an das Trägermaterial.

## Beschreibung

### Stand der Technik

Die Erfindung betrifft ein textilkaschiertes Bauteil, welches ein Trägermaterial und zumindest abschnittsweise eine Textilie aufweist, die mit einer Schutzschicht überzogen ist.

Im Automobilbereich ist es bekannt, Streben mit einem Gewebe bestehend aus Carbonfasern zu verkleiden und das Gewebe mit einem durchsichtigen Lack zu beschichten. Problematisch erweist sich dabei, dass die Carbonfasern zwar eine hohe Festigkeit und Steifigkeit, jedoch eine geringe Bruchdehnung aufweisen. Dies bedeutet, dass die Fasern relativ leicht brechen und spröde sind. Das aus den Carbonfasern hergestellte Gewebe ist unelastisch und passt sich deshalb dem Trägermaterial schlecht an. Bei der Verwendung von Carbonfasergeweben sind einem Designer enge Gestaltungsgrenzen gesetzt. Insbesondere ist es im Automobilbereich bislang nur bekannt, Stoffe, Leder, lackierte Plastik- oder Holzträger und Aluminiumelemente für die Innenraumdekoration zu verwenden.

### Aufgabe der Erfindung

Aufgabe der vorliegenden Erfindung ist es, ein Bauteil bereitzustellen, welches einem Designer größere gestalterische Freiheit gibt.

### Gegenstand der Erfindung

Erfindungsgemäß wird diese Aufgabe dadurch gelöst, dass bei einem Bauteil der eingangs genannten Art die Textilie als elastisch verformbare Textilie, insbesondere elastisch verformbares Geflecht, Gewebe, Gestrick, Gewirk, oder sogennanntes Nonwoven, wie z.B. ein Vlies, ausgebildet ist. Während eine aus Carbonfasern bestehende Textilie ausschließlich als Gewebe bekannt ist, kann eine elastisch verformbare Textilie als Gewebe, Strick - oder Wirkware und Geflecht hergestellt werden. Die Vorteile des elastisch verformbaren Materials liegen insbesondere in der einfachen Verarbeitung am Trägermaterial. Die elastisch verformbare Textilie kann flexibler, beispielsweise in Rundungen, eingearbeitet werden. Insbesondere müssen weniger Einschnitte in die Textilie vorgenommen werden, als dies mit einem Carbongewebe gemäß dem Stand der Technik notwendig ist. Weiterhin bietet die Verwendung einer elastisch verformbaren Textilie eine Vielzahl an Gestaltungsmöglichkeiten. Die Textilienelastizität und die Textilienbeschaffenheit können an die Gestalt des Trägermaterials angepasst werden. Dadurch kann eine leichtere Be- und Verarbeitung der Textilie erreicht werden. Durch die Elastizität der Textilie kann vermieden werden, dass sich die Textilie beim Aufbringen auf das Trägermaterial verzieht, wie dies beispielsweise bei einem Carbongewebe der Fall sein kann. Weiterhin kann bei einem elastischen Material die Textilschicht faltenfrei aufgebracht werden.

Bei unterschiedlichen Trägerformen, beispielsweise im Innenbereich eines Kraftfahrzeugs, können unterschiedlich beschaffene Textilien verwendet werden, die die gleiche Optik aufweisen. Beispielsweise kann auf einem Lenkrad eine Textilie einer höheren Elastizität aufgebracht werden als auf einer ebenen Fläche, wo mit einer Textilie geringerer Elastizität die gleiche Optik erzielt werden kann. Dies ist mit einem Carbongewebe nicht möglich. Dadurch wird die gestalterische Freiheit eines Designers erheblich erweitert. Die Erfindungsgemäßen Bauteile können insbesondere im Automobilbereich, vorzugsweise bei der Innenraumgestaltung, Anwendung finden. Weiterhin ist es denkbar, dass Möbel durch derartige Bauteile veredelt werden.

Eine größere Elastizität der Textilie sowie eine einfachere Entsorgung (Recycling) werden erreicht, wenn die Textilie carbonfrei ausgebildet ist. Vorzugsweise ist die Elastizität der Textilie entsprechend der Form des zu kaschierenden Bauteils gewählt, so dass bei einer Anordnung mehrerer Bauteile unterschiedlicher Formen mit unterschiedlichen Textilien derselbe optische Eindruck erzeugt werden kann. Im Extremfall kann dabei bei einem oder mehreren Bauteilen eine unelastische Textilie Verwendung finden. Die Verwendung unterschiedlich elastischer Textilien bei unterschiedlichen Bauteilformen zur Erzeugung im Wesentlichen desselben optischen Eindrucks, beispielsweise im Innenraum eines Fahrzeugs, wird als eigenständiger erfinderischer Gedanke gesehen.

Die gestalterische Freiheit wird erweitert, wenn die Textilie eine Leuchtfaser oder ein Leuchtgarn aufweist. Die Leuchtfaser oder das Leuchtgarn können beispielsweise reflektierend oder (elektro-) lumineszierend sein.

Die Elastizität der Textilie kann bereits durch die Art ihrer Herstellung, beispielsweise als Gewirk oder Gestrick, beeinflusst werden. Weiterhin kann die Elastizität der Textilie beeinflusst werden, wenn die Textilie eine elastische Faser oder ein elastisches Garn, insbesondere ein gummiartiges Garn oder eine gummiartige Faser, aufweist.

Die Textilie ist rutschsicher auf dem Trägermaterial gehalten, wenn sie mittels eines Zweikomponentenklebers, insbesondere Dispersionsklebers, auf das Trägermaterial aufgeklebt ist. Die Verwendung eines Dispersionsklebers hat den Vorteil, dass dieser lösungsmittelfrei ist. Somit können die Emissionswerte im Innenraum, beispielsweise eines Fahrzeugs, verringert werden.

Bei einer bevorzugten Ausgestaltung der Erfindung kann vorgesehen sein, dass die Schutzschicht als transparente Folie oder transparenter Lack ausgebildet ist. Durch diese Maßnahme ist die Textilie durch die Schutzschicht hindurch sichtbar. Durch geeignete Wahl der Farbe, des Musters oder der Strukturierung der Textilie können somit die optischen Eigenschaften des Bauteils beeinflusst und verändert werden. Dadurch ergibt sich für einen Designer eine größere gestalterische Vielfalt.

Ein besonders guter Schutz der Textilie ergibt sich, wenn die Lackschicht mehrere Schichten aufweist. Die Schutzschicht kann eine glänzende oder matte Oberfläche aufweisen.

Bei einer vorteilhaften Ausführungsform kann vorgesehen sein, dass die Oberfläche der Schutzschicht strukturiert ist. Dadurch können die optischen Eigenschaften des Bauteils eingestellt und verändert werden. Die Strukturierung der Schutzschicht kann sich durch die Struktur der darunter liegenden Textilie ergeben. Weiterhin ist es denkbar, dass die Oberfläche der Schutzschicht gezielt bearbeitet wird, um die haptischen Eigenschaften der Oberfläche des Bauteils einzustellen.

In den Rahmen Erfindung fällt außerdem ein Verfahren zur Herstellung eines textilkaschierten Bauteils mit den Verfahrensschritten:
a. Aufbringen einer elastisch verformbaren Textilie auf einem Trägermaterial
b. Beschichten der Textilie mit einer Schutzschicht

Dabei wird auf ein Trägermaterial, welches beispielsweise aus Holz oder Kunststoff sein kann, eine elastisch verformbare Textilie aufgebracht. Um die Textilie zu schützen, wird anschließend eine Schutzschicht aufgebracht. Der Vorteil der Verwendung eines elastisch verformbaren Materials liegt darin, dass dieses sich besonders gut an die Form des Trägermaterials anpasst. Die Textilien können beispielsweise auf Rohlinge für Türgriffe, Schaltknauf, Handbremshebel oder dgl. aufgebracht werden. Weiterhin können die mit der Schutzschicht überzogenen Textilien auf Zierleisten im Instrumentenbereich, als Einsätze in Kunststoffteilen, als Sitzkomponenten oder im Mittelkonsolenbereich eines Fahrzeugs Verwendung finden. Bei besonderen Anwendungen, beispielsweise als Sitzkomponente, kann die Textilie gleichzeitig das Trägermaterial darstellen. Die elastisch verformbare Textilie kann unterschiedliche Materialien aufweisen, beispielsweise Naturfasern: Baumwolle, Flachs, Wolle, Seide; Spezialfasern: Metallfasern, Glasfasern, Fluor-Fasern, Aramide, Leuchtfasern; Chemiefasern: natürliche Polymere (z.B. Viskose, Cupro, Acetat, Triacetat...), Synthetische Polymere (z.B. Polyester, Polyamid, E-lasthan, Polyacryl, Modacryl, Polypropylen, Polyethylen, Polyvinylchlorid, Vinal PVA...) oder Mischungen unterschiedlicher Materialien. Vorteilhafterweise kann die Herstellung des Bauteils maschinell und automatisiert erfolgen.

Eine gute Anhaftung der elastisch verformbaren Textilie auf dem Trägermaterial ergibt sich, wenn vor dem Aufbringen der Textilie die Textilie und das Trägermaterial auf den einander zugewandten Seiten mit einem Zweikomponentenkleber versehen werden.

Bei einer bevorzugten Verfahrensvariante kann vorgesehen sein, dass die Textilie mit einer ersten Lackschicht, vorzugsweise mittels einer Walze, bestrichen wird. Das Aufwalzen der ersten Schicht hat den Vorteil, dass sich im Lack keine Bläschen bilden.

Das Anhaften der ersten Lackschicht kann verbessert werden, wenn vor dem Aufbringen der ersten Lackschicht die Textilie mit einem Isoliergrund behandelt wird.

Bei einer vorteilhaften Verfahrensvariante ist vorgesehen, dass auf die erste Lackschicht eine oder mehrere Lackschichten aufgespritzt werden, wobei vor dem Aufbringen der nächsten Lackschicht eine Trocknungszeit abgewartet wird und die Lackschicht angeschliffen wird. Vorteilhafterweise werden mindestens zwei Lackschichten aufgebracht. Bevorzugt ist es jedoch, wenn mehrere Lackschichten, insbesondere 7 - 10 Lackschichten aufgebracht werden. Die Lackschichten, insbesondere die oberste Lackschicht, können eine besondere Oberfläche aufweisen, beispielsweise glatt, strukturiert, matt oder glänzend sein.

Nach dem Aufbringen der Lackschichten wird das Bauteil vorteilhafterweise auf Maß gebracht, insbesondere auf Maß gefräst. Anschließend kann das Bauteil mit Schablonen, insbesondere Original-Bauteilen, überprüft werden.

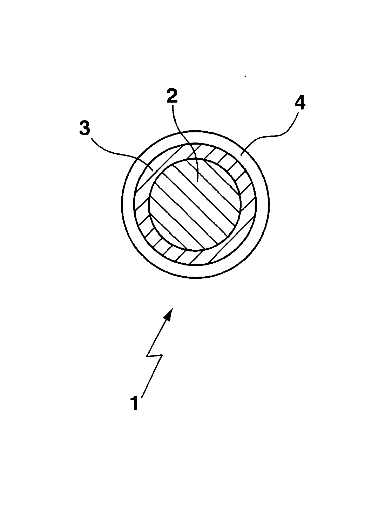

Weitere Merkmale und Vorteile der Erfindung ergeben sich aus der nachfolgenden Beschreibung eines Ausführungsbeispiels der Erfindung, anhand der Figur der Zeichnung, die erfindungswesentliche Einzelheiten zeigt, und aus den Ansprüchen. Die einzelnen Merkmale können je einzeln für sich oder zu mehreren in beliebiger Kombination bei einer Variante der Erfindung verwirklicht sein.

### Zeichnung

Ein Ausführungsbeispiel ist in der schematischen Zeichnung dargestellt und wird in der nachfolgenden Beschreibung erläutert. Die einzige Figur zeigt schematisch einen Querschnitt durch ein erfindungsgemäßes Bauteil.

In der einzigen Figur ist der Querschnitt eines Bauteils 1 gezeigt. Auf einem Trägermaterial 2 ist eine elastisch verformbare Textilie 3 aufgeklebt. Die Textilie 3 ist durch eine Schutzschicht 4, die aus mehreren Lackschichten ausgebildet ist, umgeben. Dadurch ist die Textilie 3 geschützt. Da die Schutzschicht 4 transparent ausgebildet ist, ist die Textilie 3 durch die Schutzschicht 4 hindurch sichtbar.

## Patentansprüche

1. Textilkaschiertes Bauteil (1), welches ein Trägermaterial (2) und zumindest abschnittsweise eine Textilie (3) aufweist, die mit einer Schutzschicht (4) überzogen ist, **dadurch gekennzeichnet, dass** die Textilie (3) als elastisch verformbare Textilie (3), insbesondere elastisch verformbares Geflecht, Gewebe, Gestrick, Gewirk oder dgl. ausgebildet ist.

2. Bauteil nach Anspruch 1, **dadurch gekennzeichnet, dass** die Textilie (3) carbonfrei ausgebildet ist.

3. Bauteil nach einem der vorhergehenden Ansprüche, **dadurch gekennzeichnet, dass** die Elastizität der Textilie (3) in Abhängigkeit von der Form des zu kaschierenden Trägermaterials (2) gewählt ist.

4. Bauteil nach einem der vorhergehenden Ansprüche, **dadurch gekennzeichnet, dass** die Textilie (3) eine Leuchtfaser oder ein Leuchtgarn aufweist.

5. Bauteil nach einem der vorhergehenden Ansprüche, **dadurch gekennzeichnet, dass** die Textilie (3) ein elastisches Garn oder eine elastische Faser, insbesondere ein gummiartiges Garn oder eine gummiartige Faser, aufweist.

6. Bauteil nach einem der vorhergehenden Ansprüche, **dadurch gekennzeichnet, dass** die Textilie (3) mittels eines Zweikomponentenklebers, insbesondere Dispersionsklebers, auf das Trägermaterial (2) aufgeklebt ist.

7. Bauteil nach einem der vorhergehenden Ansprüche, **dadurch gekennzeichnet, dass** die Schutzschicht (4) als transparente Folie oder transparenter Lack ausgebildet ist.

8. Bauteil nach Anspruch 7, **dadurch gekennzeichnet, dass** die Lackschicht mehrere Schichten aufweist.

9. Bauteil nach einem der vorhergehenden Ansprüche, **dadurch gekennzeichnet, dass** die Oberfläche der Schutzschicht (4) strukturiert ist.

10. Verfahren zur Herstellung eines textilkaschierten Bauteils (1) mit den Verfahrensschritten:
a. Aufbringen einer elastisch verformbaren Textilie (3) auf einem Trägermaterial (2),
b. Beschichten der Textilie (3) mit einer Schutzschicht (4).

11. Verfahren nach Anspruch 10, **dadurch gekennzeichnet, dass** vor dem Aufbringen der Textilie (3) die Textilie (3) und das Trägermaterial (2) auf den einander zugewandten Seiten mit einem Zweikomponentenkleber versehen werden.

12. Verfahren nach einem der Ansprüche 10 oder 11, **dadurch gekennzeichnet, dass** die Textilie (3) mit einer ersten Lackschicht, vorzugsweise mittels einer Walze, bestrichen wird.

13. Verfahren nach einem der vorhergehenden Ansprüche 10 bis 12, **dadurch gekennzeichnet, dass** vor dem Aufbringen der ersten Lackschicht die Textilie (3) mit einem Isoliergrund behandelt wird.

14. Verfahren nach einem der vorhergehenden Ansprüche 10 bis 13, **dadurch gekennzeichnet, dass** auf die erste Lackschicht eine oder mehrere Lackschichten aufgespritzt werden, wobei vor dem Aufbringen der nächsten Lackschicht eine Trocknungszeit abgewartet wird und die Lackschicht angeschliffen wird.

15. Verfahren nach einem der vorhergehenden Ansprüche 10 bis 14, **dadurch gekennzeichnet, dass** das Bauteil (1) auf Maß gebracht, insbesondere gefräst, wird.
